# EUROPÄISCHE PATENTSCHRIFT

(11) **EP 1 659 146 B1**
(45) Veröffentlichungstag und Bekanntmachung des Hinweises auf die Patenterteilung: **21.02.2007**
(21) Anmeldenummer: 05024376.5
(22) Anmeldetag: 09.11.2005
(51) Int. Cl.: C08K 3/22, H01B 1/00, C08L 97/02

(54) **Elektrisch leitfähige Holzwerkstoffplatte und Verfahren zu deren Herstellung**
Electrically conductive wooden plate and process for its production
Plat en bois électriquement conducteur et procédé pour sa production

(30) Priorität: 23.11.2004 EP 04027806
(43) Veröffentlichungstag der Anmeldung: 24.05.2006
(73) Patentinhaber: GLUNZ AG, 49716 Meppen (DE)
(72) Erfinder: Kalwa, Norbert, Dr., 32805 Horn-Bad Meinberg (DE); Oldemeyer, Wilhelm, 37079 Göttingen (DE)
(74) Vertreter: Rehberg Hüppe + Partner

(56) Entgegenhaltungen:
- EP-A- 1 382 637
- US-A- 4 664 856
- US-A- 4 906 484
- PATENT ABSTRACTS OF JAPAN Bd. 1996, Nr. 11, 29. November 1996 (1996-11-29) & JP 08 174512 A (YAMAGUCHI HARUHIKO), 9. Juli 1996 (1996-07-09)

## Beschreibung

Die Erfindung betrifft eine elektrisch leitfähige Holzwerkstoffplatte mit den Merkmalen des Oberbegriffs des Patentanspruchs 1 sowie ein Verfahren zu deren Herstellung mit den Merkmalen des Oberbegriffs des Patentanspruchs 8.

Während die Erfindung grundsätzlich auf unterschiedlichste Holzwerkstoffplatten, einschließlich Faserplatten, Spanplatten und Grobspanplatten anwendbar ist, ist sie insbesondere für mitteldichte Faserplatten von Bedeutung, die für eine Pulverbeschichtung, wie eine Pulverlackierung, vorgesehen sind.

### STAND DER TECHNIK

Mitteldichte Faserplatten werden umfangreich im Innenausbau und Möbelbau verwendet. Ein besonders umfangreicher Einsatz erfolgt beim Bau von Küchenmöbeln. Mitteldichte Faserplatten können aufgrund ihrer vergleichsweise homogenen Struktur im Volumen unter Ausbildung von Oberflächen bearbeitet werden, die grundsätzlich für das direkte Beschichten, insbesondere durch Lackieren, geeignet, d. h. hinreichend geschlossen, sind.

Ein modernes Lackierverfahren ist die Pulverlackierung, bei der zunächst ein elektrostatisch aufgeladenes Lackpulver unter Anwendung eines elektrischen Felds möglichst gleichmäßig auf der zu lackierenden Oberfläche verteilt und anschließend auf dieser Oberfläche aufgeschmolzen und zu einer homogenen, fest an der Oberfläche anhaftenden Lackschicht verbunden wird. Das Pulverlackieren stellt dabei bestimmte Anforderungen an die zu lackierende Oberfläche. Sie muss für das Aufbauen des elektrischen Felds hinreichend elektrisch leitfähig sein und sie muss eine ausreichende thermische Stabilität, d. h. insbesondere eine hohe Dimensionsstabilität bei den beim Pulverlackieren auftretenden Temperaturen aufweisen.

Bei herkömmlichen mit Harnstoff- und/oder Melamin-Formaldehyd-Harz gebundenen mitteldichten Faserplatten liegt ohne weiteres keine ausreichende elektrische Leitfähigkeit für eine Pulverbeschichtung vor. Es ist zwar eine Erhöhung der Restfeuchtigkeit von normalerweise etwa 5 % auf höhere Werte möglich, um hierdurch eine elektrische Leitfähigkeit bereitzustellen. Diese Einstellung der Restfeuchtigkeit auf einen erhöhten Wert ist aber sehr komplex, weil die Restfeuchtigkeit nicht so weit gesteigert werden darf, dass die Dimensionsstabilität der Faserplatte verloren geht. Zudem ist eine erhöhte Restfeuchtigkeit einer Faserplatte nicht stabil und kann nur in aufwändigen klimatisierten Umgebungen konstant gehalten werden. Darüber hinaus bereitet eine erhöhte Restfeuchtigkeit bei Erhitzen der Faserplatte zum Aufschmelzen des dort zunächst aufgetragenen Lackpulvers Probleme, weil sie zu starken Kräften im Volumen der Holzfaserplatte führt. Konkret wird häufig ein Reißen der Beschichtung und/oder der Faserplatte selbst in den Bereichen beobachtet, in denen ihre Oberfläche nicht durch ihre verdichtete Deckschicht ausgebildet wird, also beispielsweise im Bereich ihrer Kanten oder von eingefrästen Profilen. Außerdem steigt mit der Erhöhung der Restfeuchtigkeit der Faserplatten die Gefahr von Feuchteausgasungen, die zu Blasen in einem auf den Faserplatten ausgebildeten Lackfilm führen können.

Es ist auch bekannt, die elektrische Leitfähigkeit von mit Harnstoff- und/oder Melamin-Formaldehyd-Harz gebundenen Faserplatten durch den Zusatz quaternärer Ammoniumsalze zu erhöhen. Diese quarternären Ammoniumsalze haben jedoch den Nachteil, dass sie nicht thermisch stabil sind. Wenn sie also bereits bei der Herstellung der Faserplatten, die mit dem heißen Verpressen einer Vorform zu der Faserplatte endet, eingesetzt werden, müssen sie in einem sehr hohen Anteil bezogen auf die Fasern von typischerweise 5 % atro Fasern eingesetzt werden, was in sehr hohe Kosten resultiert. Ein nachträgliches Aufbringen einer Lösung von quarternären Ammoniumsalzen auf die Oberfläche einer mitteldichten Faserplatte unmittelbar vor dem Pulverbeschichten ist nicht nur ein zusätzlicher Schritt und bedeutet damit zusätzlichen Aufwand, es führt auch zum unerwünschten Einbringen zusätzlicher Feuchtigkeit in die zu beschichtende Oberfläche und den hieraus resultierenden, bereits oben beschriebenen Problemen. Außerdem kann die Glattheit der Oberfläche durch die konzentrierte Feuchtigkeit der aufgetragenen Salzlösung geschädigt werden. Die fehlende thermische Stabilität der quarternären Ammoniumsalze kann darüber hinaus zu einer unangenehmen Geruchsentwicklung führen. Dies gilt auch dann, wenn die quaternären Ammoniumsalze erst später aufgetragen werden, weil sie auch dann erhöhten Temperaturen beim Aufschmelzen des auf die Oberflächen der Faserplatte aufgebrachten Pulvers ausgesetzt werden.

Aus der DE 192 32 874 A1 sind eine Holzwerkstoffplatte mit den Merkmalen des Oberbegriffs des Patentanspruchs 1 und ein Verfahren zu deren Herstellung mit den Merkmalen des Oberbegriffs des Patentanspruchs 8 bekannt. Hier wird dem Bindemittel für die Lignocellulose enthaltenden Fasern ein Alkali- und/oder Erdalkalisalz zur Verbesserung der elektrischen Leitfähigkeit zugegeben. Um mit dem Alkali- und/oder Erdalkalisalz jedoch nicht das Bindemittel zu schädigen bzw. dessen Aushärtung zu behindern, wird das Salz oder Salzgemisch mittels einer Salzflotte mit einem neutralen pH-Wert in die Platte eingelagert. Entsprechend kommen nur Alkali- und/oder Erdalkalisalze mit einem neutralen pH-Wert in Frage. Genannt sind Lithiumnitrat und Natriumnitrat. Diese Salze sind ähnlich kostspielig wie quaternäre Ammoniumsalze und bedeuten so ebenfalls erhebliche zusätzliche Kosten bei der Herstellung der bekannten Holzwerkstoffplatten. Außerdem sind für eine ausreichende Bindung der bekannten Holzwerkstoffplatte relativ hohe Bindemittelanteile von 10 bis 15 % erforderlich. Dies wird auf eine Beeinträchtigung des Bindemittels durch die Alkali- und/oder Erdalkalisalze zurückzuführen sein, da übliche Harnstoff- und/oder Melamin-FormaldehydHarze als Bindemittel für eine optimale Aushärtung eine saure Umgebung erfordern.

Als Stand der Technik ist in der DE 102 32 874 erwähnt, dass eine gewisse Leitfähigkeit bei Holzwerkstoffplatten auch auftritt, wenn salzhaltige Leime, beispielsweise Phenolharz eingesetzt werden. Allerdings sollen die in diesen Leimen enthaltenen, für die Aushärtung des Phenolharzes benötigten Salze als relativ starke Basen (Alkalihydroxide) bei der Weiterverarbeitung der Holzwerkstoffplatten deren Beschichtung behindern, so dass mit Phenolharz gebundene Holzwerkstoffplatten grundsätzlich schlecht zu beschichten sein sollen. Ferner wird auf das Problem verwiesen, dass es bei einer Änderung der Luftfeuchte bei solchen Holzwerkstoffplatten zu ausgeprägten Dimensionsänderungen kommen kann.

### AUFGABE DER ERFINDUNG

Der Erfindung liegt die Aufgabe zugrunde, eine Holzwerkstoffplatte mit den Merkmalen des Oberbegriffs des Patentanspruchs 1 und ein Verfahren zu deren Herstellung mit den Merkmalen des Oberbegriffs des Patentanspruchs 8 aufzuzeigen, die kostengünstig umsetzbar sind und die die Voraussetzungen für ein einfaches Pulverlackieren der Holzwerkstoffplatten mit hoher Qualität der lackierten Oberflächen schaffen.

### LÖSUNG

Die Aufgabe der Erfindung wird bei einer Holzwerkstoffplatte mit den Merkmalen des Patentanspruchs 1 gelöst. Bevorzugte Ausführungsformen dieser Holzwerkstoffplatte sind in den Unteransprüchen 2 bis 7 beschrieben. Bei einem Verfahren zur Herstellung einer Holzwerkstoffplatte wird die Aufgabe der Erfindung durch die Merkmale des Patentanspruchs 8 gelöst. Bevorzugte Ausführungsformen dieses Verfahrens sind in den Unteransprüchen 9 bis 14 dargelegt.

### BESCHREIBUNG DER ERFINDUNG

Bei der neuen elektrisch leitfähigen Holzwerkstoffplatte ist die Alkaliverbindung des Mittels zur Erhöhung der Leitfähigkeit Natrium- und/oder Kaliumhydroxid; das Mittel zur Erhöhung der Leitfähigkeit liegt bezogen nur auf die Restfeuchtigkeit der Holzwerkstoffplatte in einem Anteil vor, der einem rechnerischen pH-Wert der Restfeuchtigkeit größer als 13,0 entspricht; und das Bindemittel ist ein Bindemittel auf der Basis von Polyisocyanaten. Zusätzlich zu der bekannten Zusammensetzung einer mit Polyisocyanaten gebundenen Holzwerkstoffplafte ist bei der neuen Holzwerkstoffplatte ein so hoher Anteil an Natrium- und/oder Kaliumhydroxid vorhanden, dass dieser, wenn er in einer wässrigen Lösung vorläge, deren Wassergehalt gleich der Restfeuchtigkeit der Holzfaserplatte wäre, einen pH-Wert dieser wässrigen Lösung größer als 13,0 ergäbe. D. h., die Restfeuchtigkeit der Holzwerkstoffplatte ist stark alkalisch und verleiht dadurch auch in geringem Anteil der gesamten Holzwerkstoffplatte die für ein Pulverbeschichten notwendige elektrische Leitfähigkeit. Als völlig überraschend hat sich herausgestellt, dass es zwischen dem Bindemittel auf der Basis vom Polyisocyanaten und der stark alkalischen Restfeuchtigkeit zu keiner die Bindungskraft des Bindemittels in Frage stellende Wechselwirkung kommt. Die hohe Alkalität der Restfeuchte führt auch nicht zu einem hygroskopischen Effekt, mit dem eine erhöhte oder gar unkontrollierte Wasseraufnahme der neuen Holzwerkstoffplatte verbunden wäre. Vielmehr wird bei der Bestimmung der Quellung der neuen Holzwerkstoffplafte beispielsweise nach MDF-Norm ein normenkonformer Wert erhalten. Im Ergebnis ist die neue Holzwerkstoffplatte aufgrund ihrer elektrischen Leitfähigkeit problemlos mit elektrostatisch aufgeladenem Pulver beschichtbar. Insbesondere kann sie pulverlackiert werden, wobei es auch im Bereich ihrer Kanten und in ihre Deckschichten eingefräster Profile zu keiner Rissbildung kommt, wie sie sonst häufig bei nicht optimal für die Pulverlackierung geeigneten Holzwerkstoffplatten beobachtet wird. Bei der Pulverbeschichtung Phenolharz-gebundenen Holzwerkstoffplatten ist eine derartige Rissbildung hingegen kaum zu vermeiden.

Das Bindemittel auf der Basis von Polyisocyanaten kann ein herkömmliches PMDI-Bindemittel sein und in einem ebenfalls üblichen Anteil von 2,5 bis 5 % atro Fasern bei der neuen Holzwerkstoffplatte eingesetzt sein.

Auch die Restfeuchtigkeit der neuen Holzwerkstoffplatte liegt typischerweise in dem für mit Polyisocyanaten gebundenen Holzwerkstoffplatten typischen Bereich von 4 bis 7 %, d. h. bei ungefähr 5 %.

Bevorzugt ist es, wenn das Mittel zur Erhöhung der Leitfähigkeit bezogen auf die Restfeuchtigkeit der Holzwerkstoffplatte in einem Anteil vorliegt, der einem rechnerischen pH-Wert der Restfeuchtigkeit größer als 13,5 entspricht. Im Regelfall wird der Anteil des Mittels zur Erhöhung der Leitfähigkeit bezogen auf die Restfeuchtigkeit der Holzwerkstoffplatte sogar einem pH-Wert von 14,0 entsprechen. Hiermit ist die gewünschte elektrische Leitfähigkeit problemlos zu erreichen, umgekehrt kommt es überraschenderweise nicht zu irgendwelchen Problemen aufgrund der hohen Alkalität der Restfeuchtigkeit.

Das Mittel zur Erhöhung der Leitfähigkeit der neuen Holzwerkstoffplatte kann das Natrium- und/oder Kaliumhydroxid in einem Anteil von 0,3 bis 3 % atro Fasern aufweisen. Natrium- und Kaliumhydroxid sind vertretbaren Preisen verfügbar und führen damit nicht zu einer solchen Kostensteigerung bei der Herstellung der neuen Holzwerkstoffplatte, die deren Wirtschaftlichkeit in Frage stellen würde. Die Mengen an Natrium- und/oder Kaliumhydroxid, die bei der neuen Holzwerkstoffplatte zum Einsatz kommen, entsprechen den Mengen dieser Substanzen, die Phenolharzen für deren Aushärtung bei mit Phenolharzen gebundenen Holzwerkstoffplatten zugesetzt werden. Mit Polyisocyanaten gebundene Holzwerkstoffplatten benötigen diesen Zusatz an starken Basen jedoch nicht. Vielmehr ist es sogar überraschend, dass Bindemittel auf der Basis von Polyisocyanaten ihre Bindungskraft unter derart stark alkalischen Bedingungen überhaupt in dem notwendigen Maß entwickeln und auch über längere Zeiträume nicht verlieren.

Die Alkalität der neuen Holzwerkstoffplatte als Ganzes ist im Übrigen kaum ausgeprägt. Bei Auflösen von 2 g einer neuen Holzwerkstoffplatte in 25 ml Wasser ergab sich trotz eines rechnerischen pH-Werts der Restfeuchtigkeit von 14,0 nur einen pH-Wert der Suspension von ca. 8. Dies ist auf die saure Pufferwirkung der Holzbestandteile der Holzwerkstoffplatte zurückzuführen, die hier trotz des hohen Anteils des Natrium- und/oder Kaliumhydroxids zu einem noch nahezu neutralen Gesamtprodukt führt.

Besonders bevorzugt ist die neue Holzwerkstoffplatte eine Faserplatte mit einer mittleren Rohdichte von 750 bis 850 kg/m³, d. h. es handelt sich um eine mitteldichte Faserplatte, wie sie insbesondere im Küchenbau häufig in lackierter Form eingesetzt wird. Die neue Holzfaserplatte kann aber auch eine Faserplatte anderer Dichte oder auch eine Span- oder Grobspanplatte sein.

In jedem Fall ist die neue Holzwerkstoffplatte in ihrer bevorzugten verarbeiteten Form an ihrer Oberfläche mindestens im Bereich einer ihrer Kanten, d. h. in einem der besonders kritischen Bereiche, pulverbeschichtet, d. h. pulverlackiert. Vielfach werden alle Oberflächen der neuen Holzwerkstoffplatte nach ihrer Endverarbeitung pulverlackiert sein.

Bei dem neuen Verfahren zur Herstellung einer elektrisch leitfähigen Holzwerkstoffplatte erfolgt die Zugabe des Mittels zur Erhöhung der Leitfähigkeit in dem Anteil, der bezogen nur auf die Restfeuchtigkeit der Holzwerkstoffplatte dem rechnerischen pH-Wert der Restfeuchtigkeit größer als 13,0 entspricht, typischerweise durch eine Zugabe von Natriumhydroxid in wässriger Lösung zu der Vorform, die anschließend zu der Holzwerkstoffplatte heiß verpresst wird. Durch das Einbringen des Mittels zum Einstellen der Alkalität der Restfeuchtigkeit der neuen Holzwerkstoffplatte bereits vor dem Heißverpressen kann eine homogene Verteilung dieses Mittels in der fertigen Holzwerkstoffplatte sichergestellt werden, so dass diese auch im Volumen eine ausreichende elektrische Leitfähigkeit aufweist.

Ansonsten sind die vorangehenden Erläuterungen der neuen Holzwerkstoffplatte auf das Verfahren zu ihrer Herstellung vollständig übertragbar.

### BEISPIEL

Bei der Herstellung von mitteldichten Faserplatten mit einer mittleren Rohdichte von ca. 800 kg/m³ wurde vor dem Formen der Vorform aus den Lignocellulose enthaltenen Fasern und dem Bindemittel Natriumhydroxid in unterschiedlichen prozentualen Anteilen atro Fasern zugegeben. Der Bindemittelanteil eines herkömmlichen PMDI-Bindemittels lag bei 4 % atro Fasern. In einem konkreten Beispiel betrug die Zugabe des Natriumhydroxids 2,5 % atro Fasern. Bei den derart hergestellten mitteldichten Faserplatten wurde eine Quellung nach MDF-Norm von 7,5 % nach dem Eintauchen für 24 h in Wasser beobachtet. Dies ist bei einer Normgrenze von 12 % Quellung ein vollkommen zufrieden stellender Wert, der insbesondere nicht erkennen lässt, dass die stark alkalische Einstellung der hier etwa 5 %igen Restfeuchte auf einen rechnerischen pH-Wert von ganz eindeutig 14,0 nicht zu einer besonderen Hygroskopie der neuen Faserplatte führt. Die Rezeptur bei der Herstellung der Holzwerkstoffplatten war nicht für die Zugabe des Natriumhydroxids optimiert, sondern entsprach bis auf die Zugabe des Natriumhydroxids einer Standardrezeptur. Die in dem Beispiel hergestellten mitteldichten Faserplatten waren aufgrund ihrer elektrischen Leitfähigkeit problemlos pulverlackierbar und wiesen auch an ihren Kanten keinerlei Risse oder andere Schäden der Lackierung auf. Derartige Schäden traten auch bei anschließender Auslagerung der Holzwerkstoffplatten in einer Klimakammer bei 40 °C Temperatur und 85° Luftfeuchtigkeit nicht auf. Dies ist auch in soweit überraschend, als dass auch das in dem Beispiel verwendete Lackierungssystem nicht auf die neuen Holzwerkstoffplatten und insbesondere nicht auf die Alkalität deren Restfeuchtigkeit abgestimmt war. Vielmehr handelte es sich um ein ganz übliches Lackierungssystem für die Lackierung von auf andere Weise elektrisch leitfähig gemachten mitteldichten Faserplatten.

## Patentansprüche

1. Elektrisch leitfähige Holzwerkstoffplatte mit einem Hauptanteil aus Lignocellulose enthaltenden Fasern, mit einem Bindemittel, mit einem Mittel zur Erhöhung der elektrischen Leitfähigkeit der Holzwerkstoffplatte und mit einer Restfeuchtigkeit, wobei das Mittel zur Erhöhung der Leitfähigkeit eine Alkaliverbindung umfasst, **dadurch gekennzeichnet,**
- **dass** die Alkaliverbindung des Mittels zur Erhöhung der Leitfähigkeit Natrium- und/oder Kaliumhydroxid ist,
- **dass** das Mittel zur Erhöhung der Leitfähigkeit bezogen auf die Restfeuchtigkeit der Holzwerkstoffplatte in einem Anteil vorliegt, der einem rechnerischen pH-Wert der Restfeuchtigkeit größer als 13,0 entspricht, und
- **dass** das Bindemittel ein Bindemittel auf der Basis von Polyisocyanaten ist.

2. Holzwerkstoffplatte nach Anspruch 1, **dadurch gekennzeichnet, dass** das Bindemittel ein PMDI-Bindemittel in einem Anteil von 2,5 bis 5 % atro Fasern ist.

3. Holzwerkstoffplatte nach Anspruch 1 oder 2, **dadurch gekennzeichnet, dass** die Restfeuchtigkeit 4 bis 7 % beträgt.

4. Holzwerkstoffplatte nach einem der Ansprüche 1 bis 3, **dadurch gekennzeichnet, dass** das Mittel zur Erhöhung der Leitfähigkeit bezogen auf die Restfeuchtigkeit der Holzwerkstoffplatte in einem Anteil vorliegt, der einem rechnerischen pH-Wert der Restfeuchtigkeit größer als 13,5, vorzugsweise einem pH-Wert von 14,0, entspricht.

5. Holzwerkstoffplatte nach Anspruch 4, **dadurch gekennzeichnet, dass** das Mittel zur Erhöhung der Leitfähigkeit das Natrium- und/oder Kaliumhydroxid in einem Anteil von 0,3 bis 3 % atro Fasern aufweist.

6. Holzwerkstoffplatte nach einem der Ansprüche 1 bis 5, **dadurch gekennzeichnet, dass** sie eine Faserplatte mit einer mittleren Rohdichte von 750 bis 850 kg/m³ ist.

7. Holzwerkstoffplatte nach einem der Ansprüche 1 bis 6, **dadurch gekennzeichnet, dass** ihre Oberfläche mindestens im Bereich einer ihrer Kanten pulverbeschichtet ist.

8. Verfahren zur Herstellung einer elektrisch leitfähige Holzwerkstoffplatte, wobei eine Vorform mit einem Hauptanteil aus Lignocellulose enthaltenden Fasern, mit einem Bindemittel, mit einem Mittel zur Erhöhung der elektrischen Leitfähigkeit der Holzwerkstoffplatte und mit einer Feuchtigkeit zu der Holzwerkstoffplatte heiß verpresst wird, wobei das Mittel zur Erhöhung der Leitfähigkeit eine Alkaliverbindung umfasst, und wobei eine Restfeuchte der Holzwerkstoffplatte eingestellt wird, **dadurch gekennzeichnet,**
- **dass** als die Alkaliverbindung des Mittels zur Erhöhung der Leitfähigkeit Natrium- und/oder Kaliumhydroxid verwendet wird,
- **dass** das Mittel zur Erhöhung der Leitfähigkeit bezogen auf die Restfeuchtigkeit der Holzwerkstoffplatte in einem Anteil eingesetzt wird, der einem rechnerischen pH-Wert der Restfeuchtigkeit größer als 13,0 entspricht, und
- **dass** als das Bindemittel ein Bindemittel auf der Basis von Polyisocyanaten eingesetzt wird.

9. Verfahren nach Anspruch 8, **dadurch gekennzeichnet, dass** als das Bindemittel ein PMDI-Bindemittel in einem Anteil von 2,5 bis 5 % atro Fasern eingesetzt wird.

10. Verfahren nach Anspruch 8 oder 9, **dadurch gekennzeichnet, dass** die Restfeuchtigkeit auf 4 bis 7 % eingestellt wird.

11. Verfahren nach einem der Ansprüche 8 bis 10, **dadurch gekennzeichnet, dass** das Mittel zur Erhöhung der Leitfähigkeit bezogen auf die Restfeuchtigkeit der Holzwerkstoffplatte in einem Anteil eingesetzt wird, der einem rechnerischen pH-Wert der Restfeuchtigkeit größer als 13,5, vorzugsweise einem pH-Wert von 14,0, entspricht.

12. Verfahren nach Anspruch 11, **dadurch gekennzeichnet, dass** das Natrium- und/oder Kaliumhydroxid in einem Anteil von 0,3 bis 3 % atro Fasern eingesetzt wird.

13. Verfahren nach einem der Ansprüche 8 bis 12, **dadurch gekennzeichnet, dass** eine mittlere Rohdichte der Holzwerkstoffplatte bei einer Faserplatte auf 750 bis 850 kg/m³ eingestellt wird.

14. Verfahren nach einem der Ansprüche 8 bis 13, **dadurch gekennzeichnet, dass** die Oberfläche der Holzwerkstoffplatte mindestens im Bereich einer ihrer Kanten pulverbeschichtet wird.

## Claims

1. Electrically conductive wood particle board having a main component of lingo-cellulose containing fibres, a binder, an agent for increasing the electrical conductivity of the wood particle board, and a residual moisture, the agent for increasing the conductivity comprising an alkali compound, **characterized in**
- **that** the alkali compound of the agent for increasing the conductivity is sodium hydroxide and/or potassium hydroxide,
- **that** the agent for increasing the conductivity is present in a proportion which, related to the residual moisture of the wood particle board, corresponds to a calculative pH value of the residual moisture of more than 13.0, and
- **that** the binder is a binder on the basis of polyisocyanates.

2. Wood particle board according to claim 1, **characterized in that** the binder is a PMDI binder present in a proportion of 2.5 to 5 % of the dry matter of the fibres.

3. Wood particle board according to claim 1 or 2, **characterized in that** the residual moisture is 4 to 7 %.

4. Wood particle board according to any of the of the claims 1 to 3, **characterized in that** the agent for increasing the conductivity is present in a proportion which, related to the residual moisture of the wood particle board, corresponds to a calculative pH value of the residual moisture of more than 13.5, preferably to a pH value of 14.0.

5. Wood particle board according to claim 4, **characterized in that** the agent for increasing the conductivity comprises the sodium hydroxide and/or potassium hydroxide in a proportion of 0.3 to 3 % of the dry matter of the fibres.

6. Wood particle board according to any of the claims 1 to 5, **characterized in that** it is a fibre board having an average raw density of 750 to 850 kg/m³.

7. Wood particle board according to any of the claims 1 to 6, **characterized in that** its surface is powder coated at least in the area of one of its edges.

8. Method for producing an electrically conductive wood particle board, wherein a preform having a main component of lingo-cellulose containing fibres, a binder, an agent for increasing the electrical conductivity of the wood particle board and a moisture is hot pressed into the wood particle board, the agent for increasing the conductivity comprising an alkaline compound, and a residual moisture of the wood particle board being adjusted, **characterized in**
- **that** sodium hydroxide and/or potassium hydroxide is used as the alkali compound of the agent for increasing the conductivity,
- **that** the agent for increasing the conductivity is used in a proportion which, related to the residual moisture of the wood particle board, corresponds to a calculative pH value of the residual moisture of more than 13.0, and
- **that** a binder on the basis of polyisocyanates is used as the binder.

9. Method according to claim 8, **characterized in that** a PMDI-binder present in a proportion of 2.5 to 5 % of the dry matter of the fibres is used as the binder.

10. Method of claim 8 or 9, **characterized in that** the residual moisture is adjusted to 4 to 7 %.

11. Method according to any of the claims 8 to 10, **characterized in that** the agent for increasing the conductivity is used in a proportion which, related to the residual moisture of the wood particle board, corresponds to a calculative pH value of the residual moisture of more than 13.5, preferably to a pH value of 14.0.

12. Method of claim 11, **characterized in that** the sodium hydroxide and/or potassium hydroxide is used in a proportion of 0.3 to 3 % of the dry matter of the fibres.

13. Method of any of the claims 8 to 12, **characterized in that**, in case of a fibre board, an average raw density of the wood particle board is adjusted to 750 to 850 kg/m³.

14. Method of any of the claims 8 to 13, **characterized in that** the surface of the wood particle board is powder coated in the area of at least one of its edges.

## Revendications

1. Panneau électriquement conducteur en matériau dérivé du bois comportant une fraction majoritaire en fibres renfermant de la lignocellulose, un liant, un moyen pour augmenter la conductivité du panneau, et une humidité résiduelle, dans lequel le moyen pour augmenter la conductivité renferme un composé alcalin, **caractérisé**
- **en ce que** le composé alcalin du moyen pour augmenter la conductivité est un hydroxyde de sodium et/ ou de potassium,
- **en ce que** le moyen pour augmenter la conductivité, rapporté à l'humidité résiduelle du panneau, est présent en une quantité qui correspond à un pH calculé de l'humidité résiduelle supérieur à 13,0, et
- **en ce que** le liant est un liant à base de polyisocyanate.

2. Panneau selon la revendication 1, **caractérisé en ce que** le liant est un liant PMDI en une quantité allant de 2,5 à 5 % des fibres sèches.

3. Panneau selon la revendication 1 ou 2, **caractérisé en ce que** la teneur en humidité résiduelle est comprise entre 4 et 7 %.

4. Panneau selon l'une des revendications 1 à 3, **caractérisé en ce que** le moyen pour augmenter la conductivité, rapporté à l'humidité résiduelle du panneau, est présent en une quantité qui correspond à un pH calculé de l'humidité résiduelle supérieur à 13,5, de préférence un pH de 14,0.

5. Panneau selon la revendication 4, **caractérisé en ce que** le moyen pour augmenter la conductivité présente une teneur en hydroxyde de sodium et/ou de potassium allant de 0,3 à 3% des fibres sèches.

6. Panneau selon l'une des revendications 1 à 5, **caractérisé en ce qu'**il est un panneau en fibres avec une masse volumique apparente moyenne comprise entre 750 et 850 kg/m³.

7. Panneau selon l'une des revendications 1 à 6, **caractérisé en ce** sa surface est revêtue par pulvérisation au moins dans la zone d'un de ses bords.

8. Procédé de fabrication d'un panneau électriquement conducteur en matériau dérivé du bois, dans lequel une préforme comportant une fraction majoritaire en fibres renfermant de la lignocellulose, un liant, un moyen pour augmenter la conductivité du panneau, et une humidité résiduelle, est pressée à chaud en un panneau, dans lequel le moyen pour augmenter la conductivité renferme un composé alcalin, et dans lequel on ajuste l'humidité résiduelle du panneau, **caractérisé**
- **en ce que** l'hydroxyde de sodium et/ou de potassium est utilisé en tant que composé alcalin du moyen pour augmenter la conductivité du panneau,
- **en ce que** le moyen pour augmenter la conductivité, rapporté à l'humidité résiduelle du panneau, est introduit en une quantité qui correspond à un pH calculé de l'humidité résiduelle supérieur à 13,0, et
- **en ce qu'**en tant que liant est introduit un liant à base de polyisocyanate.

9. Procédé selon la revendication 8, **caractérisé en ce qu'**en tant que liant est introduit un liant PMDI en une quantité allant de 2,5 à 5 % des fibres sèches.

10. Procédé selon la revendication 8 ou 9, **caractérisé en ce que** l'humidité résiduelle est ajustée entre 4 et 7 %.

11. Procédé selon les revendications 8 à 10, **caractérisé en ce que** le moyen pour augmenter la conductivité, rapporté à l'humidité résiduelle du panneau, est introduit en une quantité qui correspond à un pH calculé de l'humidité résiduelle supérieur à 13,5, de préférence un pH de 14,0.

12. Procédé selon la revendication 11, **caractérisé en ce que** l'hydroxyde de sodium et/ou de potassium est introduit en une quantité allant de 0,3 à 3% des fibres sèches.

13. Procédé selon les revendications 8 à 12, **caractérisé en ce que** la masse volumique apparente moyenne du panneau est ajustée, pour un panneau en fibres, entre 750 et 850 kg/m³.

14. Procédé selon les revendications 8 à 13, **caractérisé en ce que** la surface du panneau est revêtue par pulvérisation au moins dans la zone d'un de ses bords.
